# EUROPEAN PATENT APPLICATION

(11) **EP 0 874 323 A1**
(43) Date of publication of application: **28.10.1998**
(21) Application number: 98106130.2
(22) Date of filing: 03.04.1998
(51) Int. Cl.: G06F 17/60, G06F 17/30

(54) **Web-browser-based conference system**

(30) Priority: 23.04.1997 DE 19717167
(71) Applicant: International Business Machines Corporation, Armonk, N.Y. 10504 (US)
(72) Inventor: Fehr, Clemens, 68163 Mannheim (DE); Riexinger, Dieter, 75223 Niefern (DE)
(74) Representative: Teufel, Fritz, Dipl.-Phys.

(57) **Abstract**

The description relates to a computer-supported application-sharing conference system, in which the conference participants can work simultaneously in an application program. In particular, the individual terminal systems are coupled to one another via the Internet or an intranet. User inputs and the representation of the application program on the individual terminal system are processed by a sharing-server module as well as by a sharing-client module. These modules are made available to the individual conference participants, for example as JAVA applets. The conference system is particularly platform-independent.

## Description

The invention relates to computer-supported video or audio conference systems, in particular those referred to as extended application-sharing systems, in which two or more parties can operate directly in an application program.

The term "application-sharing" covers in general a number of different interpretations. In the simplest case, the user is provided with the opportunity of transferring selected screen contents to the other party. Depending on the concept, in this situation a video window is used, or additional program windows are opened at the other party's terminal. In this way, both participants can discuss data or diagrams.

In what is referred to as "extended application-sharing", it is now possible for both parties to operate directly in an application program. In this case, the program runs only on one computer, but also makes operating functions available, such as keyboard inputs or mouse control, on the other computer(s) participating in the conference. Smaller volumes of data can in this case be exchanged directly by means of the intermediate files known in Windows-based systems ("Windows" is a registered trademark of the Microsoft Corp.). In this context, the relevant data is flagged on the originating computer and copied into the intermediate file. The application-sharing module then ensures that the data is transferred into the intermediate file of the target computer, from where it can be taken over, for example, by means of the "insert" command into almost any desired program.

A further aid for inter-computer team work is provided by a "notice board" ("shared whiteboard"), such as, for example, in the "ProShare" application-sharing program developed by Intel ("Proshare" is a registered trademark of the Intel Corp.). This allows for the common processing of a scratchpad, with text blocks, markings, and simple graphic sketches which can be placed as desired. In addition to this, ProShare offers the possibility of freezing individual images from the video window being displayed, and storing it as a bitmap file on a hard disk. This makes it easy, for example, for a passport picture of the corresponding party or a snapshot of documents held in front of a camera to be captured on the hard disk.

The video conference computer is, in almost all cases, a Windows computer. Other operating systems, such as OS/2, Unix, or Mac (these names are registered trademarks of the companies IBM, AT&T, and Apple respectively) are at present hardly supported, or not supported at all. Traditional conference applications accordingly require that each conference participant obtains a licence for the conference application; however, these applications are often bound to one single operating system platform. Previous application-sharing systems have therefore been designed as traditional applications, the use of which is restricted to one or several operating systems. Examples of such applications are P2P, Intel ProShare, or Shared_X ("P2P" and "Shared X" are registered trademarks of IBM and HP). The users of a conference application are accordingly compelled to agree on a product or to use products which employ a common standard. Conference applications which allow for the joint editing of documents do not, in most cases, follow a common standard.

There are, in addition to this, conference application systems known which allow for the sharing of HTTP documents using conventional WWW (World Wide Web) servers. Such a system is described in the article "A Design and Implementation of Conference Mosaic", by the authors Euihyun Jung et al., as Conference Proceedings of the "10th International Conference on Information Networking", POSTECH Information Research Lab, Pohang, South Korea. This system features a conventional user interface, similar to the known "Mosaic" WWW Browser. In particular, the system is even based on the Mosaic Browser which has been modified accordingly for the conference application. In a special operating mode, the shared data is downloaded before a conference to the individual local system of each conference participant, without a connection having to be established to the WWW server. The scope of application of this conference system extends from interactive on-line games and application programs being used by several users simultaneously, through to the sharing of Internet services, such as the well-known FTP (File Transfer Protocol) Gopher.

A further application-sharing system, making use of the Internet, is known from an article by H. M. Abdel-Wahab et al., with the title "XTV: A Framework for Sharing X Window Clients in Remote Synchronous Collaboration", published in IEEE, New York, 1991, pages 159-167. XTV is a distributed system which allows for the synchronous sharing of X Window applications in a group of remotely-located users, where the users are connected with one another via the Internet by means of workstations, based on an X-platform. The main components of this system are, in particular, laid out so that they can be used again in other conference systems and applications.

The present invention is accordingly based on the objective of creating a conference system of the appropriate genetic nature in an information or computer network, which makes possible the common use of any desired applications, irrespective of the basic operating system platform. In particular, in this context, the use of a conventional Internet Browser on the part of the conference participants is advised.

This objective is achieved in the present invention by the fact that provision is made for a first function unit arranged on a first system unit, for generating output information from an application executed on the first system unit and for transferring the output information to at least one second system unit, as well as for receiving and processing user inputs from the second, as a minimum, system unit and for entering the user inputs into the application, and at least one second function unit arranged on the second, as a minimum, system unit, for presenting the output information on the second, as a minimum, system unit, and for transferring the user inputs to the first function unit. As system units, consideration may be given to all digital terminal systems which feature a memory for storing the required function units, as well as media for recording user inputs and for the presentation of the basic application. Consideration can be given in particular, as a system unit, to workplace computers (PC's), workstations, or to the currently much-discussed network computers. In a preferred embodiment, in this context, the output data represents the graphic user interface of the particular application. It is emphasised that the invention allows for the common processing of complete application programs, and not only of individual documents.

In view of the fact that the proposed conference concept requires only the generally available web browsers, it is, due to its independence from the individual transfer protocol, also entirely platform independent. In addition to this, there are no modifications at all required to the existing web browsers. The actual conference application can therefore, for example, be distributed as JAVA Applet(s), and co-ordinated by a JAVA conference application on the web server.

In one advantageous embodiment of the invention, provision may be made for at least one third system unit connected to the first system unit and to the second, as a minimum, system unit, the said third system unit holding ready at least one of the two function units for transferral to at least one of the first and second system units, or that at least one third system unit is provided, connected to the first and the second, as a minimum, system unit, the said third system allowing at least one of the two function units to be directly implemented. It is therefore possible to transfer the function units required for the conference only shortly before the start of a conference to the computer of the individual conference participant, or to implement the function units directly on another system unit. Accordingly, no modifications are required to existing participant terminal systems.

The invention can in addition, be applied both via an intranet, or by systems coupled via an internet.

In a further embodiment of the invention, provision can be made for a connection protocol which is TCP/IP (Transmission Control Protocol/Internet Protocol) secured, to be used as the transfer protocol. This accordingly renders the conference system according to the invention platform-independent.

In a further embodiment, at least one of the function units is provided as an "applet" (mini-application) on a third system unit, designed as a web (HTTP) server, in order to download the applet from the web server before the start of the conference into one of the system units of the conference participants. The applets can then be implemented, for example, on a wed side of the systems units. Because of its platform independence, JAVA is especially well-suited as a development environment for the applets.

The presentation of the user interface of the individual application can be effected by means of a standard graphics format, such as GIF, since these formats are supported by existing browsers.

The objective on which the invention is based is further resolved by a process in which the output information is generated on an application implemented on the first system unit, which transfers the output information to the second, as a minimum, system unit, the user inputs are received and processed by the second, as a minimum, system unit, the user inputs are loaded into the application, the output information is presented on the second, as a minimum, system unit, and the user inputs are transferred to the first system unit.

Further advantageous embodiments of the device and process according to the invention can be derived from the Sub-Claims.

On the basis of the architecture according to the invention, any desired applications can be distributed in an inter-platform arrangement. An application-related standardisation, such as, for example, has been applied in Standard T.120 for a whiteboard application, is not required in this situation, since the conference application runs centrally for all participants on an HTTP (Hypertext Transfer Protocol) server with the proposed conference extension. Each participant uses a standard HTTP browser without any extension. This means that all previous applications are available for common utilization, without a user licence for a conference application having to be obtained for each participant, e.g. for Intel ProShare.

In a preferred embodiment of the invention, therefore, the conference application proposed by the invention is implemented on an HTTP conference server. Before the start of a conference, each conference participant logs on to the conference server. Access entitlements can be allocated and made available to all the conference participants, with the examination of their Internet addresses. For intra-net applications, the conference application can advantageously be offered as JAVA class.

Apart from this, no further application program (conference application) is required for the conduct of the conference among the participants. The web browser, which has by now been installed on virtually all personal computers (PC) or every workstation, is the only precondition for the implementation of the invention.

In the following section the invention is described in detail on the basis of examples of embodiments. In this context,
- Fig. 1: shows the information flow in a system environment based on the invention;
- Fig. 2a: shows an initial embodiment for setting up a web-sharing conference;
- Fig. 2b: shows a further embodiment according to Figure 2a;
- Fig. 3: shows a user interface based on JAVA;
- Fig. 4: shows an extended embodiment of the invention based on Fig. 3.

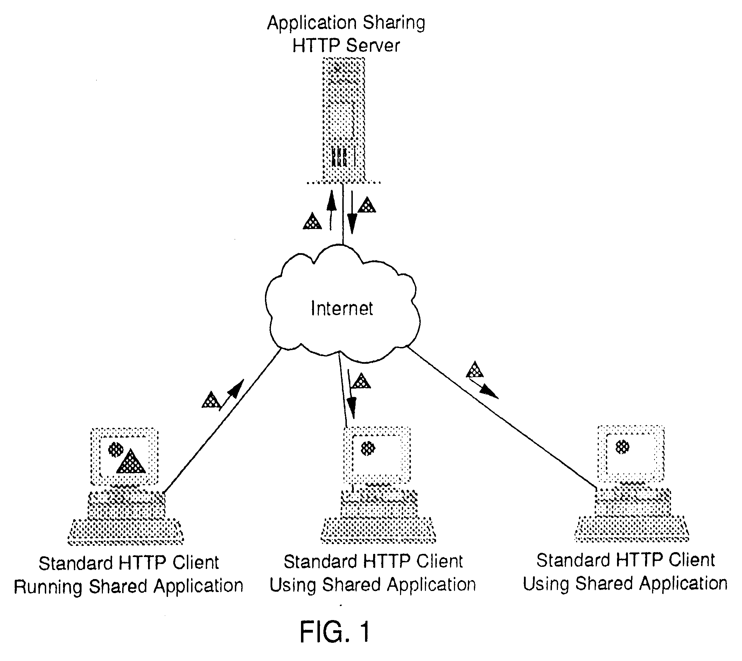

Fig. 1 shows a typical system environment, based in this case on the Internet, together with the architecture based on the present invention, in the form of a schematic representation. In this example of a system environment, an HTTP server, designed as an application-sharing server, is connected via the Internet with a series of conference participants, i.e. HTTP clients. It is further assumed, in this case, that the application used in common by the participants, is stored at one of the HTTP clients, and is originally implemented there. This party is likewise a participant in the conference. The current output information of the application is now transferred via the HTTP server in each case to the HTTP clients, in order for them likewise to be able to operate interactively with the application.

Most of the existing application programs are not designed for use in a computer-supported conference. The user interfaces for these programs only appear on a monitor. In order to be able to represent the user interface on several computers with differing operating system platforms, the graphic outputs of the application programs in particular must be acquired, and distributed accordingly among the conference participants. With the conference system according to the invention, an HTML (Hypertext Markup Language) format serves as the common exchange format. The outputs of the application which is to be distributed to one of the HTTP clients shown in Fig. 1 are first converted into the HTML format and transferred to the application-sharing server. This server process can be carried out in the same computer or on a remote computer.

The conversion into the HTML format occurs with non-HTML applications by means of the GIF picture format. In the case of JAVA applications, distribution is effected via the graphic output command to the JAVA libraries in order to enhance the performance of the conference system,.

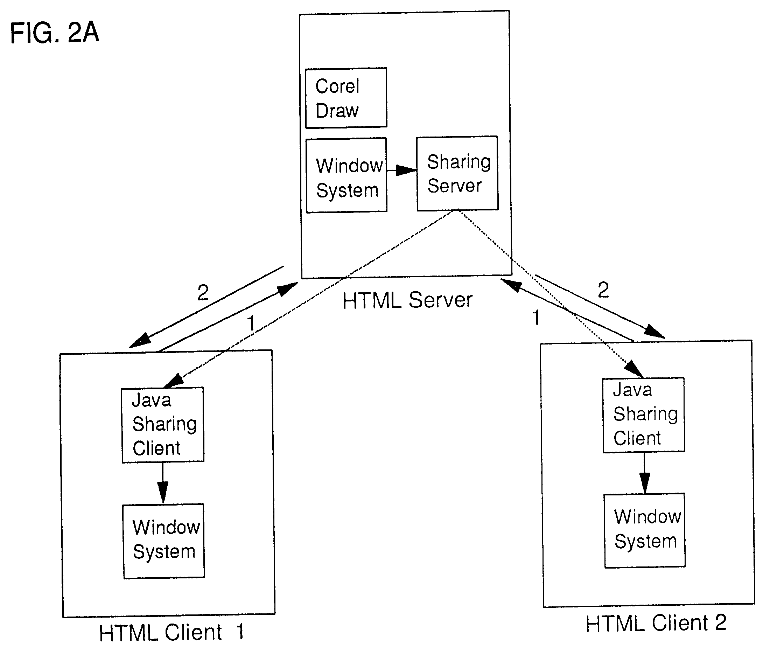

In the embodiment shown in Fig. 2a, for setting up a web-sharing conference, it is assumed that two terminal systems connected via the Internet (clients) are communicating with each other by means of a server which is likewise connected to the Internet. It is, however, emphasised at this point that the invention is already capable of application in a network in which only one client is connected to a server, and in which an application-sharing procedure is taking place even without a conference to be based on. It might be conceived, for example, that the latest software products for testing out a server are being downloaded, in which case the original version remains on the server, and can be implemented there as well.

With the network shown in Fig. 2a, Windows-based operating systems are installed both on the two terminal systems as well as on the server. The application program concerned, in this vase the drawing program "Corel Draw" from Messrs. Corel ("Corel Draw" is a registered trademark of Messrs. Corel) is installed only on the server. The operational software required for supporting the sharing conference provides, on the one hand, what is referred to as a sharing-server module on the individual server, and, on the other, what is referred to as a sharing-client module on the individual terminals (clients). The program modules referred to are implemented, to advantage, in the platform-independent development language JAVA. These modules are described hereinafter in greater detail.

### Sharing server module

The sharing server module has the task, in particular, of acquiring the graphic outputs of the application to be distributed, and to serialize the user input of all conference participants, and to transfer the application in such as way as if the input was being carried out at the local workstation.

The following steps explain the sequence of a conference:
1. Loading the server module:
   The server module is made available to the conference participant in the form of a JAVA applet. The JAVA applet offers the user functions with the aid of which he can select any desired application for distribution.
2. Acquisition of the graphic output data:
   At the start of the conference, each participant receives a complete output of the application in the form of a compressed bitmap, e.g. in GIF format. From this time on, only the modifications, e.g. text areas, are acquired and distributed.
3. Handling the user inputs
   The server module receives the user input directly from the participant client modules. These inputs are first checked for validity, i.e. whether the corresponding client module was entitled to accept user inputs. The input data are made available via the system queue of the particular window system of the application. In view of the fact that, in general, the local user inputs are also processed via this queue, the incorporation of the user inputs for the application are easily monitored.

### Sharing client module

The task of the sharing client module is to represent the graphic data received from the server module in a web browser or a sperate window. All user inputs which are located in the application area of the web browser are transferred, in contrast to the server module. The following steps explain the sequence of a conference:
1. Loading the client module:
   The client module is made available to the conference participants in the form of a JAVA applet. The JAVA applet offers the user functions with the aid of which he can request the right of input to a distributed application.
2. Representing the graphic output data:
   At the start of the conference, the client module represents the distributed application in the web browser as a graphic. From this time on, only the changes will be implemented on this graphic; e.g. the drawing of a circle.
3. Acquisition of user inputs:
   The client module receives all the user inputs which are effected with the application in the web browser. These user inputs are forwarded to the server module, if the user has previously requested and received input entitlement.

At the start of a conference, the participants dial in, for example, to an application-sharing HTTP server. This procedure can be protected by means of a password issued to the individual participants before the conference. Each participant then receives the current status of the conference displayed as an HTML page. This HTML page represents the user interface of the application which is to be distributed. Each participant then has the opportunity of using this program himself. The user inputs from the participants are accepted by the sharing-client module, prepared as a JAVA applet, and are forwarded by this to the sharing-server module. At that point, the inputs are incorporated into the individual application program as user inputs, by means of the sharing-server module. The corresponding changes to the user interface are in turn distributed to all the conference participants.

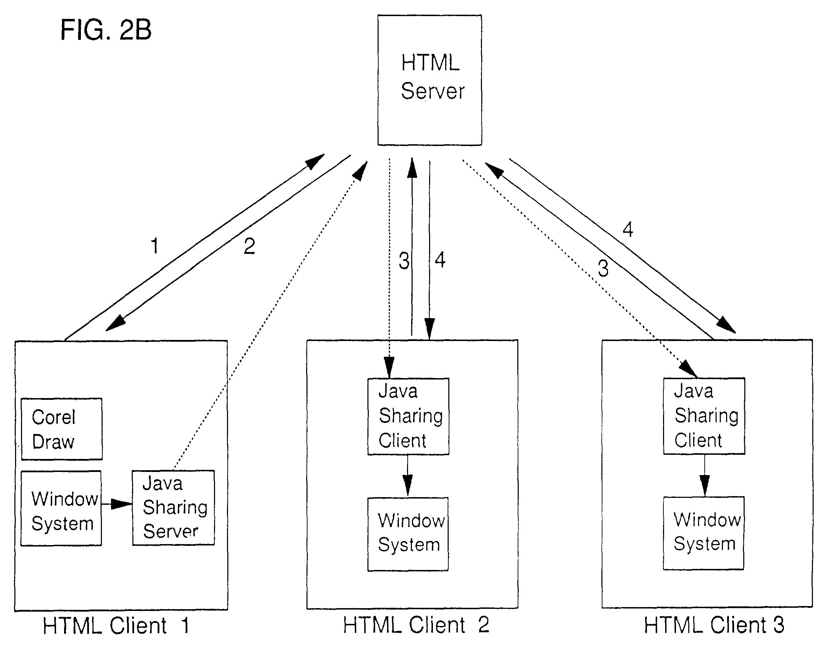

In the case of the embodiment shown in Fig. 2b, by contrast with the embodiment in Fig. 2a, the individual application program is not arranged on the server, but on one of the clients. Accordingly, the sharing-server module required is also installed on this client. This client is also provided with an HTTP server interface.

In a further embodiment of the invention, the users are provided with a series of graphics operations, which allow, among other things, for the annotation of the distributed application. These functions can likewise be advantageously carried out as JAVA classes on the individual client computer. For the sake of clarity, it is assumed that, in an architecture corresponding to Fig. 2a, one of the participants carries out the "triangle marker" annotation. The corresponding JAVA applet passes the data across the triangle which has been drawn, e.g. co-ordinates, colours, or edge, as an answerback to the conference HTTP server. This then distributes the data to all the clients, who likewise cause the operation to be carried out by the same JAVA applet.

It is emphasised that it is only due to the new capabilities which the JAVA classes make available in the Internet or intranet applications that an interactive conference application can be rendered possible. The JAVA applets carried out on the client machines are capable of reacting to events on the conference HTTP server. A user of the conference application does not actively need to arrange the renewal of the individual HTML page. This functional capacity of the JAVA classes also allows for the development of services for the synchronisation of the user inputs.

The synchronisation of the user inputs can be effected in different ways. In most cases, the user right to input is governed by means of an input token. The possessor of a token decides to whom he will pass on the input right. Each participant must request the input right beforehand by means of a function at the user interface.

As already described, it is of particular advantage to program the control modules required for the conference in the JAVA development language. In another embodiment of the invention, this concept is extended in detail, such that the application programs on which it is based are programmed in JAVA. In the following section, therefore, a process is described for carrying out the distribution of any desired JAVA applications.

The process replaces the components received as standard in JAVA for presentation and for the processing of elements of the user interface by means of a new component. Usually, the implementation of the classes required for the JAVA runtime system are located in a file named "Classes.Zip". This applies to al platforms to which JAVA support applies.

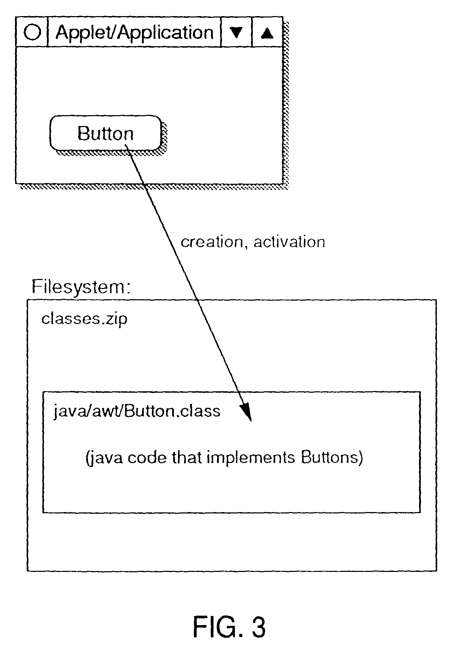

Fig. 3 now shows how a user interface generated in JAVA is defined by JAVA classes, which are deposited in these zip files. This file is available for every client, in which situation the interface is identical to the classes for all platforms. This is contrasted, however, by the fact that the implementation of the classes on the different platforms takes place in a differing manner; for example, to represent a button in JAVA programs, objects of the class "Button Class" are created. The implementation of this class is different on every platform, and is a constituent part of the individual JAVA runtime system. To represent a button, the originating graphic mechanisms are utilised, which are present on the individual platform.

The architecture of the JAVA runtime system is entirely identical, up to the interfaces which are contained in the zip file mentioned. It is only within this file that the platform-dependent implementations are located. This fact is exploited in the present invention in that the implementation of the classes allocated to the individual user is replaced by a distribution component. This distribution component provides for the exchange of the data needed for the application. In order to be able to fulfil the objective of the representation and handling of elements of the user interface, the existing implementation is embedded in the distribution component and used by this jointly.

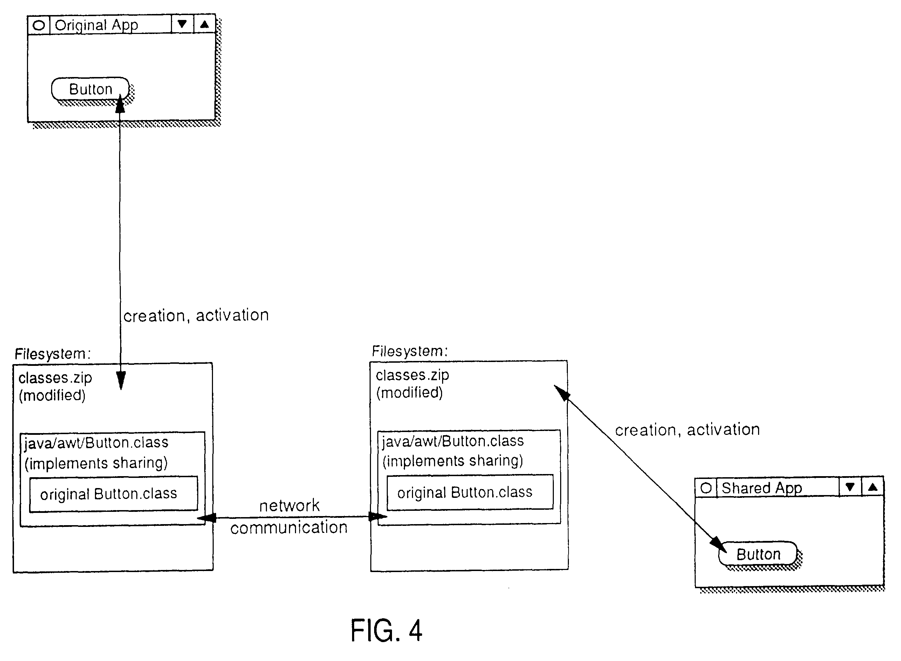

This is now made clear in Fig. 4. The process of replacing parts of the existing program code in the zip file referred to, by a new part, is concordant on all systems, since the file format and the format of the instructions within the file are standardised. In Fig. 4, this is demonstrated by the example of the replacement of the program code for the handling of simple buttons.

As a further example, the distribution of the methods for setting the labelling of a button is described, on the basis of a pseudo-code:

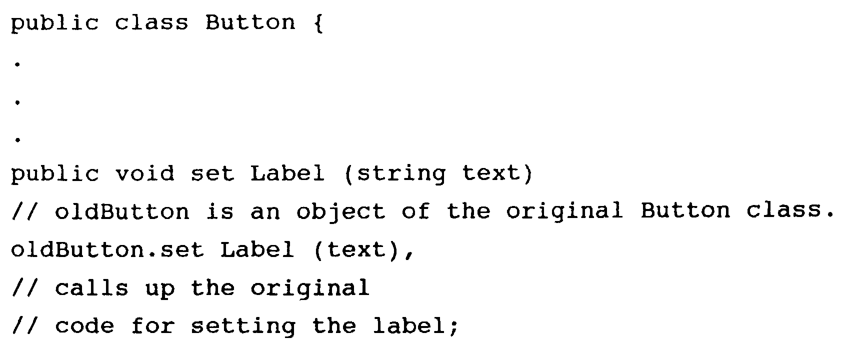

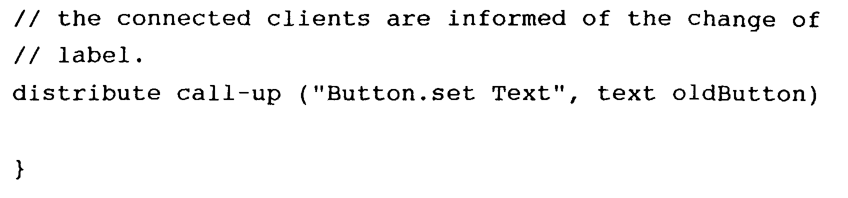

The procedure described accordingly fulfils the highest demands for processing speed, since no image data needs to be exchanged via the network, but only data such as, for example, "Button" was printed, or "Button" is created at position (XY). At the individual client machine, these commands are again converted in call-ups to the corresponding classes for switching surfaces in the file referred to, "Classes.Zip".

## Claims

1. A device for the common processing of an application, on a first digital system unit and on one, as a minimum, second digital system unit connected to the first system unit,
characterised by:
A first function unit arranged on the first system unit for generating output data for an application implemented on the first system unit, and for transferring the output data to the second, as a minimum, system unit, as well as for receiving and processing user inputs from the second, as a minimum, system unit, and for inputting the user inputs into the application;
At least one second function unit, arranged on the second, as a minimum, function unit, for presenting the output information on the second, as a minimum, system unit, and for transferring the user inputs to the first function unit.

2. A device according to Claim 1, characterised in that at least one third system unit is provided, connected to the first and the second, as a minimum, system unit, which prepares at least one of the function units for transferring to at least one of the first and second system units.

3. A device according to Claim 1, characterised in that at least one third system unit is provided, connected with the first and the second, as a minimum, system unit, which prepares at least one of the function units for direct implementation.

4. A device according to one of the foregoing Claims, characterised in that the system units are connected with one another via an intranet or the Internet.

5. A device according to Claim 4, characterised in that a TCP/IP protocol is provided as the transfer protocol between the system units.

6. A device according to one of Claims 2, 4, or 5, characterised in that at least one of the function units is prepared as an applet on a third system unit, designed as a web (HTTP) server, in order to download the applet from the web server into one of the system units.

7. A device according to Claim 6, characterised in that the applet is implemented on a web site of one of the first or second system units.

8. A device according to one of Claims 2 or 4 to 7, characterised in that at least one of the function units is designed as a JAVA applet.

9. A device according to one of the foregoing Claims, characterised in that the output data represents the graphic user interface of the application.

10. A device according to Claim 9, characterised in that the user interface is represented in bitmap or GIF format.

11. A device according to one of Claims 2 or 4 to 10, characterised by a presentation of the output data by means of a web browser, present in at least one of the system units.

12. A device according to one of Claims 2 or 4 to 11, characterised by media for indicating the common processing of an application at the third system unit.

13. A process for the common processing of an application on a first digital system unit and on at least one second digital unit connected with the first system unit,
characterised in that:
Output data is generated from an application implemented on the first system unit;
The output data is transferred to the second, as a minimum, system unit;
User inputs from the second, as a minimum, system unit are received and processed;
The user inputs are introduced into the application;
The user data is presented on the second, as a minimum, system unit; and
The user inputs are transferred to the first system unit.

14. A process according to Claim 13, characterised in that the processing of the output data and the user inputs is effected by means of at least one function unit present on one of the system units, in which situation at least one of the functions units is prepared by a third system unit which is connected to the first and the second, as a minimum, function unit, and is transferred to at least one of the first and second system units.

15. A process according to Claim 13, characterised in that the processing of the output data and the user inputs takes place by means of at least one function unit, present on one of the system units, in which situation at least on of the function units is prepared for direct implementation on a third system unit which is connected to the first and, as a minimum, second system unit.

16. A process according to one of Claims 13 to 15, characterised in that the system units are connected with one another via an intranet or Internet.

17. A process according to Claim 16, characterised in that data is transferred between the system units by means of a TCP/IP protocol.

18. A process according to Claim 15 or 16, characterised in that at least one of the function units is prepared as an applet on a third system unit designed as a web (HTTP) server, in order to download the applet from the web server into one of the system units.

19. A process according to Claim 18, characterised in that the applet is implemented on a web site by at least one of the first or second system units.

20. A process according to one of Claims 15 to 19, characterised in that at least one of the function units is designed as a JAVA applet.

21. A process according to one of the foregoing Claims, characterised in that the output data is represented as a graphic user interface of the application.

22. A process according to Claim 21, characterised in that the user interface is represented in the bitmap or GIF format.

23. A process according to one of Claims 13 or 15 to 22, characterised in that the output data is represented by means of a web browser present in at least one of the system units.

24. A process according to one of Claims 13 or 15 to 23, characterised in that common processing of an application is notified beforehand at the third system unit.
